Europäisches Patentamt

European Patent Office

Office européen des brevets

(11) Publication number: **0 214 801**
**A1**

(12) **EUROPEAN PATENT APPLICATION**

(21) Application number: **86306539.7**

(22) Date of filing: **22.08.86**

(51) Int. Cl.⁴: **G 01 F 23/14**

(30) Priority: **22.08.85 ZA 856385**
**24.10.85 ZA 858179**

(43) Date of publication of application:
**18.03.87 Bulletin 87/12**

(84) Designated Contracting States:
**AT BE CH DE FR GB IT LI LU NL SE**

(71) Applicant: **PARMADE INSTRUMENTS C.C.**
**c/o Stephen Ipp & Whitesman 1st Floor Citicom House 17**
**New Church Street**
**Cape Town Cape Province(ZA)**

(72) Inventor: **Cownley, Michael Dehane**
**No: 1 Freda's Lane Diep River**
**Cape Town Cape Province(ZA)**

(74) Representative: **Boydell, John Christopher et al,**
**Stevens, Hewlett & Perkins 5 Quality Court Chancery**
**Lane**
**London, WC2A 1HZ(GB)**

(54) **A method of monitoring the liquid contents of a container vessel, monitoring apparatus for use in such method, and an installation including such apparatus.**

(57) Apparatus for monitoring the liquid contents of a container vessel 10 comprises a pair of pressure transducers 16.1, 16.2, 120, 192 arranged at different levels in the vessel or in an upright tube 114 leading from the vessel. The signals provided by the pressure transducers are processed in a processor 22, 122 to provide an output signal corresponding to the value $^1/|P_1 - P_2|$, where $P_1$ is the pressure sensed by the one pressure transducer and $P_2$ is the pressure sensed by the other pressure transducer. This corresponds to the level of the liquid in the vessel and is independent of the specific gravity of the liquid. In another embodiment two pressure values are obtained by a single pressure transducer 120 arranged at the bottom of an upright measuring tube 114 leading from the vessel. There is a solenoid operated valve 118 at the bottom of the tube and a solenoid operated valve 116 at the top of the tube. One pressure value is obtained with the pressure transducer subjected to the overall head of liquid in the vessel and in the measuring tube, and a second pressure value is obtained with the pressure transducer subjected to the head of liquid in the measuring tube only, the top of the measuring tube being vented to atmosphere. In yet a further embodiment, where the content of the vessel is subject to a varying gas pressure, a further pressure transducer 16.3 is provided to sense the gas pressure and to compensate for the effect which this has on the pressure measurements $P_1$ and $P_2$.

FIG. I

EP 0 214 801 A1

A method of monitoring the liquid contents of a container vessel, monitoring apparatus for use in such method, and an installation including such apparatus.

THIS INVENTION relates to the monitoring of the liquid contents of a container vessel. More particularly, it relates to a method of monitoring the liquid contents of such vessel, to monitoring apparatus for use in the method, and to an installation including such apparatus.

Where the specific gravity of a liquid does not vary, the level of the liquid in a vessel can be determined by measuring the pressure exerted by the liquid at a low level in the vessel. This method is, however, not a reliable one where the specific gravity of the liquid is subject to variation, such as is the case with fermenting liquor in a wine vat. Other methods of determining the level of a liquid in a container vessel are to view the level directly through, for example, a sight glass, to measure it by means of a dip stick, or to indicate it by means of a float-operated mechanism. None of the latter methods lends itself to incorporation in a system where data as to the liquid level has to be transmitted to a remotely located control and/or logging station. Furthermore, the use of a dip stick or a float-operated mechanism is often not suitable in processes such as fermentation in a wine vat which should as far as is possible take place in a hermetically sealed environment.

It is to be understood that the invention is not limited to monitoring of the level of a liquid in a container vessel. The invention can, for example, be applied in monitoring the specific gravity of the liquid in an automated manner. In the wine-making industry the specific gravity of fermenting liquors is usually determined by manually tapping off samples from time to time and then measuring the specific gravity of the samples in a laboratory. This is clearly not suitable in an automated control and/or logging system.

It is an object of the present invention to provide a method of and apparatus for monitoring the liquid contents of a container vessel, in which the contents of the vessel can be hermetically sealed and which is suitable for implementation in an automated monitoring system.

Although reference has been made above to the wine-making industry, it will be understood that the present invention can find application in many diverse fields where the liquid contents of a container vessel has to be monitored.

According to the invention there is provided a method of monitoring the contents of a container vessel which is partly filled with a liquid so that the liquid defines a liquid surface level within the vessel, wherein the pressure at the bottom of a first column of the liquid is sensed to obtain a first signal corresponding to the pressure at the bottom of the first column, the first column extending from a first predetermined level with respect to the vessel to said liquid surface level; characterised in that the pressure at the bottom of a second column of the liquid is sensed to obtain a second signal corresponding to the pressure at the bottom of the second column, the height of the second column, or the difference in height between the first and second columns, being a predetermined value; the first and second signals being processed to obtain an output signal as a predetermined function of the first and second signals.

Where the difference in height between the first and second columns is a predetermined value, the second column extending from a second predetermined level with respect to the vessel to said liquid surface level, the pressure at the bottom of the first column may be sensed by a first pressure transducer and the pressure at the bottom of the second column may be sensed by a second pressure transducer spaced vertically from the first pressure transducer, the vertical spacing between the first and second pressure transducers determining said predetermined value.

The first and second pressure transducers may be mounted at different levels on the vessel. Alternatively, part of the liquid contents of the vessel may be caused to flow into an upright measuring tube leading from the vessel, the first and second pressure transducers being mounted at different levels on the measuring tube.

In the latter event, the measuring tube may be opened from time to time at its end remote from the vessel, to cause displacement of the liquid in the measuring tube by fresh liquid from the vessel.

Said processing may include dividing one of the first and second signals by the difference between the first and second signals.

Where the height of the second column is a predetermined value, part of the liquid contents of the vessel may be caused to flow from the vessel into an upright measuring tube leading from the vessel, the first signal being obtained by sensing the pressure at a low end of the measuring tube while there is flow communication between the interior of the vessel and the measuring tube, and the second signal being obtained by sensing the pressure at the low end of the tube while flow communication between the interior of the vessel and the measuring tube is blocked off and a high end of the tube is vented, the height of the measuring tube between the low and high ends thereof determining said predetermined value.

The high end of the tube, when vented, may be vented to atmosphere.

The first signal may be obtained by a pressure transducer mounted at said low end of the measuring tube, the second signal being obtained by the same pressure transducer at a different time.

The method may further comprise sensing the pressure in the vessel above said liquid surface level to obtain a third signal corresponding to the pressure in the vessel above the liquid surface level, said processing including processing of the third signal to obtain said output signal as a predetermined function of the first, second, and third signals.

Further according to the invention there is provided an installation which comprises a container vessel for containing a liquid partly filling the vessel so that the liquid defines a liquid surface level within the vessel, and monitoring apparatus for monitoring the contents of the vessel, characterised in that the monitoring apparatus comprises:

sensing means for sensing two pressures, namely the pressure at the bottom of a first column of the liquid to obtain a first signal corresponding to the pressure at the bottom of the first column, and the pressure at the bottom of a second column of the liquid to obtain a second signal corresponding to the pressure at the bottom of the second column, the arrangement being such that the first column extends from a first predetermined level with respect to the vessel to said liquid surface level, and that the height of the second column, or the difference in height between the first and second columns, is a predetermined value; and

processing means for processing the first and second signals to obtain an output signal as a predetermined function of the first and second signals.

The monitoring apparatus may further comprise:

an upright measuring tube leading from the vessel;

a first valve at a high end of the measuring tube, the first valve being arranged, in one condition thereof, to place the interior of the vessel in flow communication with the measuring tube and, in another condition thereof, to block off the interior of the vessel from the measuring tube; and

a second valve at a low end of the measuring tube, the second valve being arranged, in one condition thereof, to close the low end of the tube and, in another condition thereof, to open the low end of the measuring tube;

said sensing means comprising a pressure transducer arranged at the low end of the measuring tube.

The invention extends to monitoring apparatus for monitoring the liquid contents of a container vessel, the apparatus comprising a first pressure transducer operative to provide a first signal corresponding to the pressure at the bottom of a first column of said liquid, characterised in that it further comprises:

a second pressure transducer operative to provide a second signal corresponding to the pressure at the bottom of a second column of said liquid; and

processing means operative to divide one of the first and second signals by the difference between the first and second signals.

The apparatus may further comprise a measuring tube for connection in flow communication with the interior of the vessel, the first and second pressure transducers being mounted at longitudinally spaced positions on the measuring tube.

The invention further extends to monitoring apparatus for monitoring the liquid contents of a container vessel, characterised in that it comprises:

a measuring tube having a high end for connection in flow communication with the interior of the vessel, and a low end opposite the high end;

a pressure transducer for sensing the pressure in the tube at the low end thereof;

a first valve at the high end of the tube, the first valve being arranged, in one condition thereof, to place the interior of the vessel in flow communication with the measuring tube and, in another condition thereof, to block off the interior of the vessel from the measuring tube; and

a second valve at the low end of the tube, the second valve being arranged, in one condition thereof, to close the low end of the tube and, in another condition thereof, to open the low end of the measuring tube.

The invention will now be described in more detail, by way of example, with reference to the accompanying drawings.

In the drawings:

Figure 1 shows diagrammatically a wine fermentation vat provided with monitoring apparatus in accordance with one embodiment of the invention;

Figure 2 is a circuit diagram showing one of the pressure transducers forming part of the apparatus, and its associated circuitry;

Figure 3 is a circuit diagram of one form of processing means forming part of the apparatus;

Figure 4 is a circuit diagram of an alternative form of processing means;

Figure 5 is a drawing similar to Figure 1, but showing a modified form of the monitoring apparatus;

Figure 6 shows a process tank provided with monitoring apparatus in accordance with another embodiment of the invention;

Figures 7a, b, and c show a measuring tube forming part of the apparatus of Figure 6, during each of three successive measuring steps;

Figure 8 is a block diagram of processing means forming part of the monitoring apparatus of Figure 6; and

Figure 9 is a drawing similar to Figure 6, but showing a modified form of the monitoring apparatus.

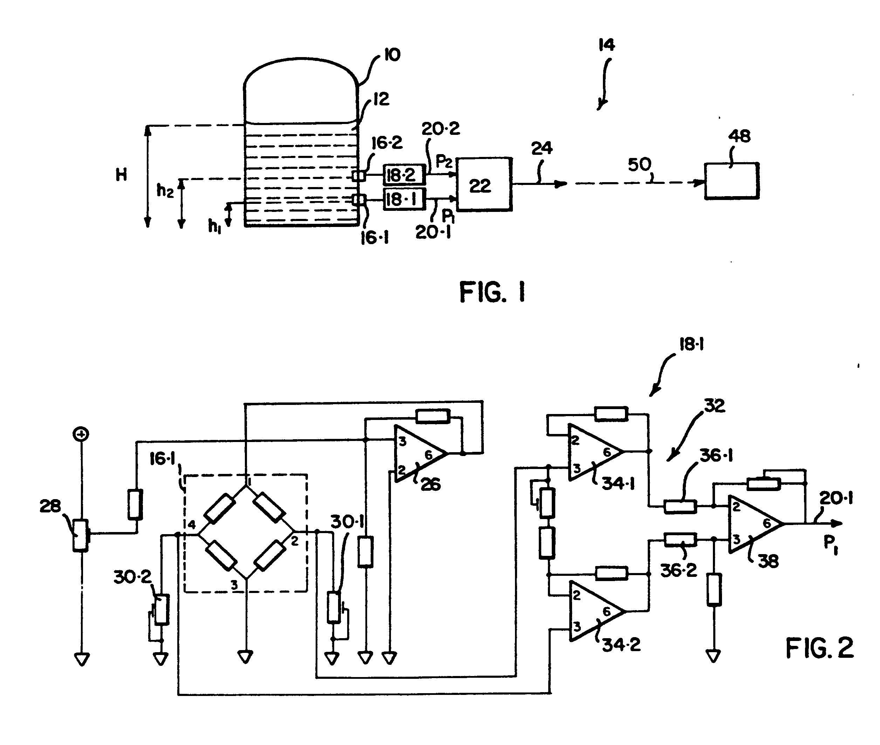

Referring first to Figure 1, reference numeral 10 indicates a container vessel in the form of a wine fermentation vat which contains a quantity of fermenting wine 12. The specific gravity of the fermenting wine 12 will depend on the degree of fermentation which has taken place. Reference numeral 14 generally indicates monitoring apparatus which comprises two pressure transducers, namely a lower pressure transducer 16.1 and an upper pressure transducer 16.2; circuitry 18.1 associated with the pressure transducer 16.1 for providing a first signal on its output 20.1; and circuitry 18.2 associated with the pressure transducer 16.2 for providing a second signal on its output 20.2. The apparatus 14 further comprises processing means 22 to which both the outputs 20.1 and 20.2 are connected, and which provides an output signal on its output 24.

The pressure $P_1$ at the level of the first pressure transducer 16.1 and the pressure $P_2$ at the level of the second pressure transducer 16.2 can be expressed as follows :

$$P_1 = (H - h_1).D$$
$$P_2 = (H - h_2).D$$

where   H   is the level of the liquid contents of the vat;

$h_1$   is the level of the first pressure transducer 16.1;

$h_2$ is the level of the second pressure transducer 16.2; and

D is the specific gravity of the liquid contents.

Thus $P_1 - P_2 = (h_2 - h_1).D$

and

$$P_1/(P_1 - P_2) = (H - h_1)/(h_2 - h_1)$$

The value $(h_2 - h_1)$ is a fixed quantity and thus the value $P_1/(P_1 - P_2)$ corresponds to the level H less a fixed offset represented by the value $h_1$. It is to be noted that this is independent of the specific gravity D.

The two pressure transducers 16.1 and 16.2 are mounted at predetermined levels in the wall of the vat 10 so that the difference between $h_1$ and $h_2$ is approximately equal to one tenth of the difference between $h_1$ and the maximum value of H.

The pressure transducer 16.1 and its associated circuitry 18.1 will now be described in more detail with reference to Figure 2. (The construction of the pressure transducer 16.2 and its associated circuitry 18.2 is identical and will therefore not be described in detail).

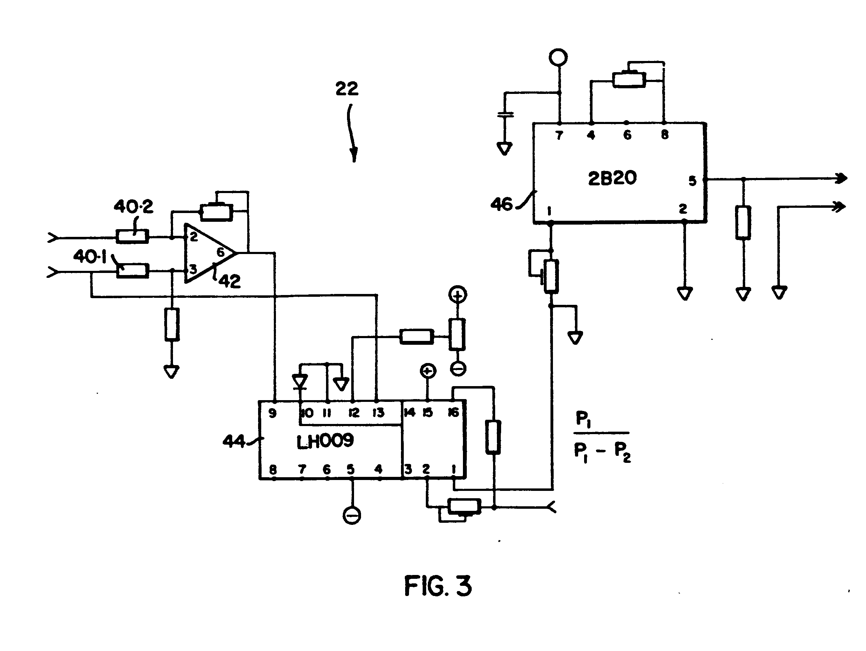

The pressure transducer 16.1 is a solid state bridge-type pressure transducer, available from Honeywell under maker's no. 130PC, which is connected up as illustrated in Figure 2. In other words, its terminal 3 is connected to earth and its terminal 1 is connected to the output of a temperature compensation operational amplifier 26 which is mounted in close thermal contact with the pressure transducer 16.1. Input terminal 2 of the operational amplifier 26 is connected to earth and input terminal 3 is connected via a voltage divider and a preset potentiometer 28 to a stable DC supply voltage. Terminals 2 and 4 of the pressure transducer 16.1 are connected to earth via preset resistors 30.1, 30.2 respectively. The terminals 2 and 4 of the pressure transducer 16.1 are further connected to the inputs of a self balancing instrumentation amplifier 32 which is known per se, and comprises two operational amplifiers 34.1 and 34.2 connected up as illustrated in the drawing. The outputs of the operational amplifiers 34.1 and 34.2 are connected, via resistors 36.1 and 36.2 respectively, to the two inputs of an operational amplifier 38 which has an adjustable gain. The output of the operational amplifier 38 is representative of the pressure sensed by the pressure transducer 16.1 and is fed to the processing means 22 which will be described in more detail hereinafter, with reference to Figure 3.

The preset potentiometer 28, which is also referred to as the pre-balancing potentiometer, is factory adjusted so as to provide the pressure transducer 16.1 with the correct biasing current. The two preset resistors 30.1 and 30.2 are also factory adjusted in order to balance the bridge constituted by the pressure transducer 16.1. Operation of the pressure transducer 16.1 is such that, when properly adjusted, the voltage difference between its terminals 2 and 4 is proportional to the pressure to which the transducer is exposed. In the circuitry 18.1, the amplifier 32 is effective to amplify individually the two voltages on terminals 2 and 4 of the transducer, whereas the operational amplifier 38 provides, on its output terminal 20.1, a first signal which is proportional to the pressure $P_1$ sensed by the transducer 16.1. The range of the signal on output 20.1 can be adjusted by adjusting the gain of the amplifier 38. Similarly, the circuitry 18.2 provides, on its output terminal 20.2 (see Figure 1) a second signal which is proportional to the pressure $P_2$ sensed by the pressure transducer 16.2.

Referring now to Figure 3, where the signal processing means 22 is illustrated in more detail, the first and second signals are fed, via resistors 40.1 and 40.2 respectively, to the inputs of a difference amplifier 42 and the output of the difference amplifier 42 fed to pin 9 of an analogue divider 44. The analogue divider 44 is in the form of an integrated circuit chip available under maker's no. LH009 from National Semi-conductors. Also, the first signal is fed to pin 13 of the analogue divider 44. The analogue divider 44 is effective to provide, on pin 1 thereof, an output signal in the form of a voltage which is proportional to the quotient of the voltages applied to the terminal pins 9 and 13 thereof respectively. Accordingly, the output signal provided by the analogue divider 44 corresponds to the value $P_1/(P_1 - P_2)$.

The output signal is then fed from the analogue divider 44 to a highly stable, linear, analogue voltage-to-current converter 46. This is an integrated circuit chip available under maker's no. 2B20. It provides an output current of 4 to 20 ma which is an industrial standard and can thus be used in, for example, a control loop to control the level of the fermenting wine 12 in the vat 10.

If desired, the output of the voltage-to-current converter 46, or the output of the analogue divider 44 direct, can be transmitted to a remote observation and/or data logging and/or control station 48 (see Figure 1) by a telemetry link 50.

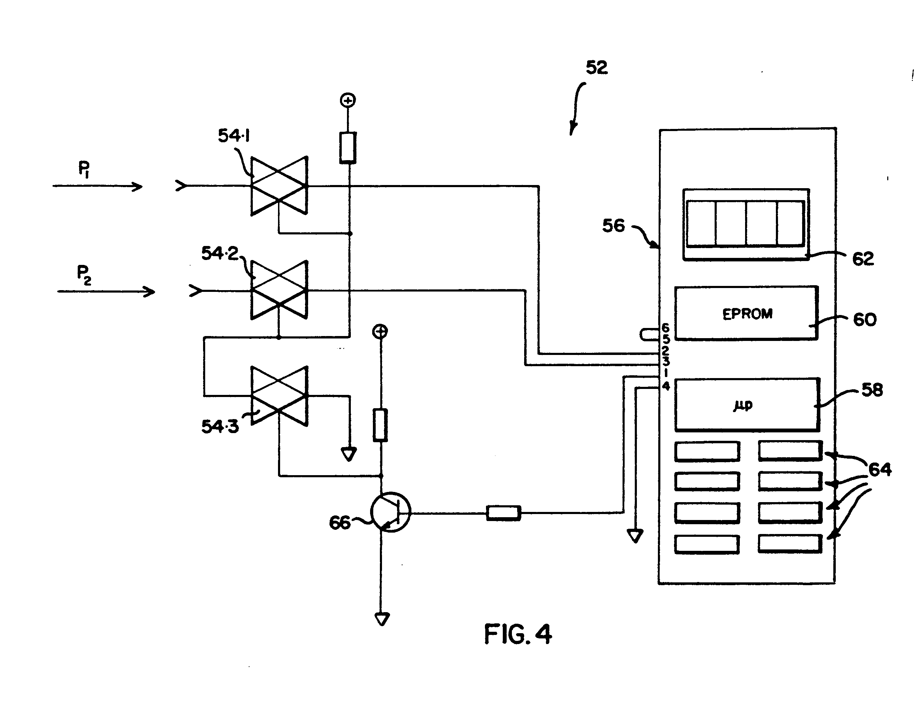

Referring now to Figure 4, there is shown a system which is similar to that illustrated in Figure 1, except that the first and second signals provided respectively by the circuits 18.1 and 18.2 are connected to a local station, generally indicated by reference numeral 52. The local station 52 has three electronic switches 54.1, 54.2, and 54.3, the two switches 54.1 and 54.2 being switchable simultaneously by operation of the electronic switch 54.3. The first and second signals are fed via the electronic switches 54.1 and 54.2 to input terminals 2 and 3 of a multipoint data logger 56. Such a data logger is known per se and comprises a microprocessor 58, an EPROM 60, a four digit digital display 62 and associated integrated circuits 64. The data logger 56 has a control output (pin 1) which is used, via a switching transistor 66, to control operation of the electronic switch 54.3 and hence operation of the switches 54.1 and 54.2.

In the Figure 4 embodiment, the microprocessor 58 is effective to provide an output signal which corresponds to the value $P_1/(P_1 - P_2)$, and this value can then be displayed on the display 62 of the data logger, or can be logged in a conventional manner, or can be used to perform certain control functions.

It will be seen that with the equipment described above it is possible to monitor the level of the liquid in the vat 10, even at a remote monitoring or control station, without the specific gravity of the liquid affecting the measurements.

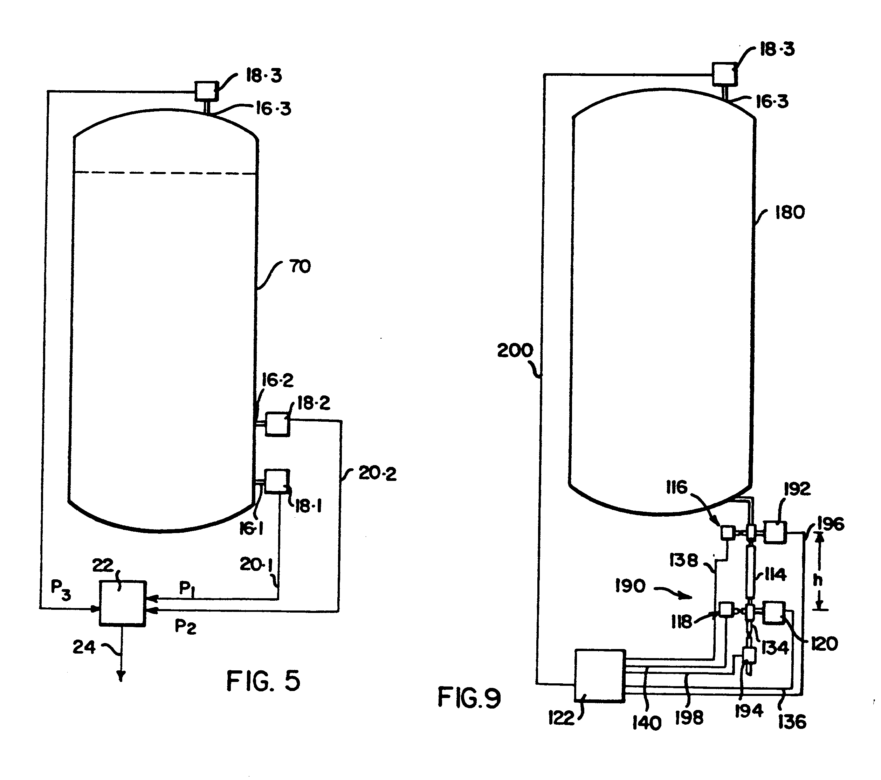

Referring now to Figure 5, reference numeral 70 indicates a container vessel which is, in use, subject to gas pressure in the region above the liquid, e.g. to displace the liquid from the container. To make allowance for this pressure (which may vary with time), a third pressure transducer 16.3 with associated circuitry 18.3, similar to the pressure transducer 16.1 and circuitry 18.1 described above, is installed at the top of the vessel to sense the gas pressure. This provides a third signal which is proportional to the pressure $P_3$ in the vessel above the liquid. The remainder of the apparatus shown in Figure 5 is similar to that described with reference to Figure 1, the same reference numerals being used to indicate the same parts. The third signal is fed to the processing means 22 which provides, on its output 24, an output signal which corresponds to the value $(P_1 - P_3)/(P_2 - P_1)$. As the level H in this embodiment can be expressed as $h(P_1 - P_3)/(P_2 - P_1)$, where, as in the Figure 1 embodiment, $h = h_2 - h_1$, being a fixed value determined by the vertical spacing between the transducers 16.1 and 16.2, the output signal will correspond to the level of liquid in the vessel 70, regardless of the specific gravity of the liquid and gas pressure in the vessel.

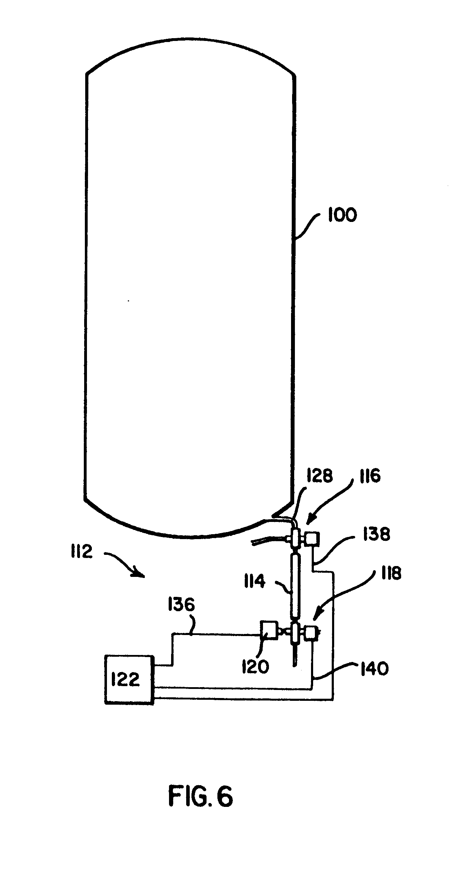

Referring now to Figure 6, reference numeral 100 generally indicates a process tank containing a liquid which is being processed, e.g. wine undergoing fermentation in a fermentation vat.

The vat 100 is provided with monitoring apparatus 112, this comprising a measuring tube 114, a first solenoid operated valve 116 at the top of the measuring tube, a second solenoid operated valve 118 at the bottom of the tube, a pressure transducer 120 also at the bottom of the tube, and electronic processing and control circuitry 122.

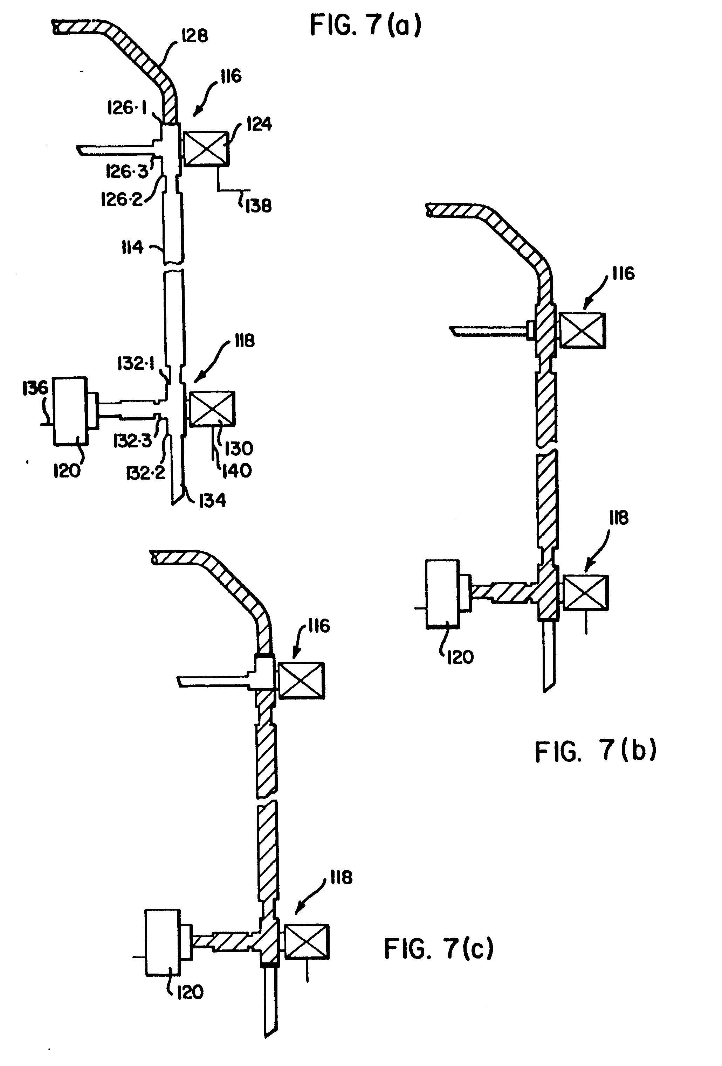

As will be seen in Figure 7, the first solenoid operated valve 116 comprises a solenoid 124, an upper port 126.1 whereby it is connected, via a tube 128, to the interior of the vat 100, a lower port 126.2 whereby it is connected to the upper end of the measuring tube 114, and a middle port 126.3 which is vented to atmosphere.

The second solenoid operated valve 118 comprises a solenoid 130, an upper port 132.1 whereby it is connected to the lower end of the measuring tube 114, a lower port 132.2 whereby it is connected to a drain outlet 134, and a middle port 132.3 whereby it is connected to the pressure transducer 120.

Each of the solenoid operated valves 124 and 130 can be in two conditions, depending on whether the solenoid 124, 130 is energized or de-energized.

The pressure transducer 120 provides an electrical signal on its connection 136, which is proportional to the pressure which it senses. The connection 136 leads to the circuitry 122.

The solenoid 124 is connected to the circuitry 122 via a connection 138, and the solenoid 130 via a connection 140.

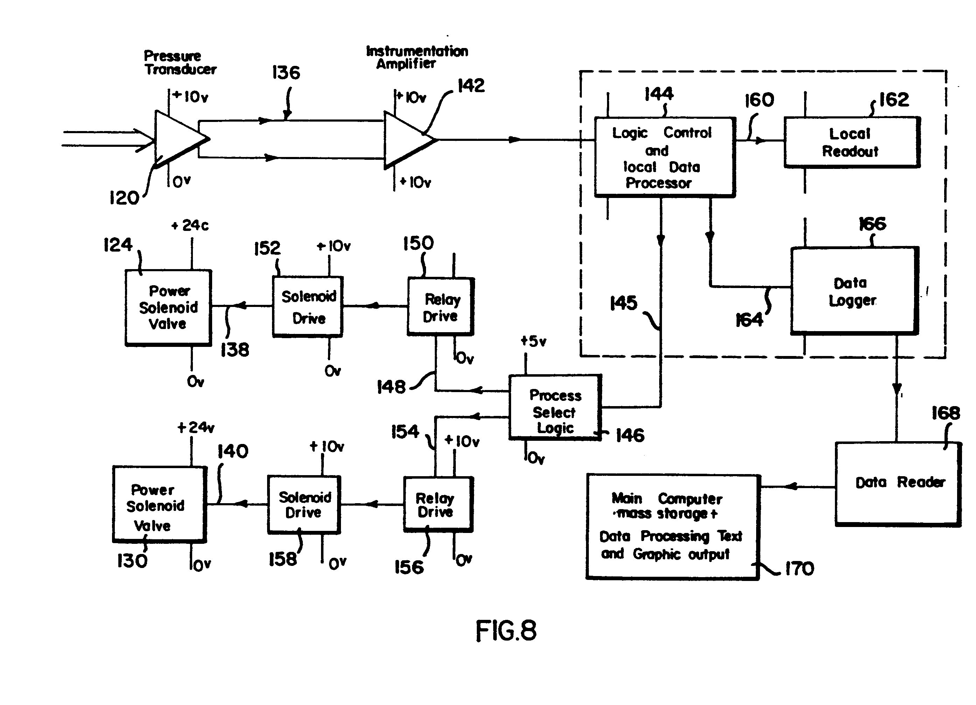

Referring now to Figure 8, it will be seen that the output of the pressure transducer 120 is fed via an instrumentation amplifier 142 to a data processor 144, the data processor providing logic control and local data processing. One of the outputs of the data processor 140 leads to process select logic (PSL) circuitry 146 which has two outputs, namely an output 148 which leads via a relay drive 150, a solenoid drive 152, and the connection 138 to the solenoid 124 (see also Figure 7), and a second output 154 which leads via a relay drive 156, a solenoid drive 158, and the connection 140 to the solenoid 130 (see also Figure 7).

The data processor 144 has a further output 160 which leads to a local read-out 162 to display certain data output provided by the processor 144. The data processor 144 has a further output 164 which leads to a data logger 166 and this in turn is connected via a data reader 168 to a main computer 170 which is able to provide for mass storage and data processing, as well as for text and graphic output.

Operation of the monitoring apparatus will now be described with reference to Figures 7a, b, and c, which respectively illustrate the measuring tube 114 during three successive switching conditions. The cross hatching in the drawings indicates liquid, whereas those parts of the tubes which are not cross hatched indicate that the tubes are empty and subject to atmospheric pressure.

During a first process step (Figure 7a), the first valve 116 will be in a condition which is referred to as 'condition 1' in which the port 126.1 is closed off and the port 126.2 is connected to the port 126.3. Furthermore, the second valve 118 will be in a condition which is referred to as 'condition 1', in which all three the ports 132.1, 132.2, and 132.3 are inter-connected. Thus, it will be seen that the measuring tube 114 is drained, the upper end being vented to atmosphere and the lower end similarly being vented to atmosphere. In this condition, the pressure transducer 120 will be subjected to atmospheric pressure.

During the next following process step (Figure 7b), the first valve 116 is switched over to its other condition which is referred to as 'condition 2', in which the middle port 126.3 is closed off and the ports 126.1 and 126.2 inter-connected. Furthermore, the second valve 118 will also be switched to the other condition which is referred to as 'condition 2', in which its port 132.2 is closed, and the ports 132.1 and 132.3 inter-connected. With the valves 116 and 118, in this condition, fluid from the vat 100 will run into the measuring tube 114, and the pressure transducer 120 thus subjected to the total head of liquid in the vat and in the measuring tube.

During the third process step (Figure 7c), the first valve 116 reverts to condition 1, whereas the second valve 118 remains in condition 2. This will cause the upper end of the measuring tube 114 to be vented to atmosphere, and the pressure transducer 120 is now subjected to the pressure head of only the liquid in the measuring tube 114. This provides a fixed column of liquid, as the measuring tube 114 is of a fixed, predetermined length.

Once the apparatus has cycled through the three stages as described above, it reverts to the stage illustrated in Figure 7a, which will cause the liquid in the measuring tube 114 to be drained from the measuring tube. The process as described above will repeat itself indefinitely, or at predetermined times under control of the logic control part of the data processor 144.

During each of the process steps, the pressure as sensed by the pressure transducer 120 is fed to the data processor 144 where the resulting data is suitably processed.

Switching of the valves 116 and 118 between the conditions 1 and 2 takes place under control of the logic control part of the data processor 144.

The pressure sensed during the first processing step (Figure 7a) will be used for calibration purposes as this will provide a 'null' value for the transducer. Any residual voltage may be nulled out to obtain a new instrument zero.

The pressure sensed during the second operating step (Figure 7b) will provide a measurement which will be proportional to the total head of the liquid in the vat 100 and in the measuring column 114, although this pressure value will be dependent on the specific gravity of the liquid. The measurment obtained during the third process step (Figure 7c) will be representative of the height of the liquid column in the measuring tube 114 only, this measurement again being dependent on the specific gravity of the lqiuid in the measuring tube. When the measurement obtained during the second process step (Figure 7b) is divided by the measurement obtained during the third process step (Figure 7c) a figure will be obtained which is representative of the total head of the liquid in the vat 100 and the measuring tube 114 in relation to the height of the column in the measuring tube 114, and this figure will no longer be dependent on the specific gravity of the liquid, providing that this is the same in the measuring tube 114 as it is in the vat 100.  As the height of the column is a known quantity, the level of the liquid in the vat can accurately be determined.

It will be appreciated that, from the pressure sensed during the third process step (Figure 7c) it is possible to derive the specific gravity of the liquid.

By draining the liquid from the measuring tube 114 during each cycle of measurements, it is ensured that the specific gravity of the liquid in the measuring tube 114 is substantially the same as that of the liquid in the vat 100. If the liquid has substantial economic value, the liquid drained from the drain connection 134 may be collected and returned to the vat.

Referring now to Figure 9, reference numeral 180 indicates a container vessel with monitoring apparatus 190 which, in certain respects, is similar to the monitoring apparatus 112 in the Figure 6 embodiment, the same or similar parts being designated by the same reference numerals. The apparatus 190 differs from the apparatus 112 in that there are provided a further pressure transducer 192, this being connected to the middle port 126.3 of the valve 116 (see Figure 7a) and a further solenoid operated valve 194, this being connected to close the drain outlet 134. The pressure transducer 192 is connected to the control circuitry 122 via a connection 196 and the solenoid operated valve 194 is connected to the control circuitry 122 via a connection 198.

The solenoid operated valves 116 and 118 are arranged to be able to isolate the pressure transducers 192 and 120 respectively from the liquid in the measuring tube 114. This will enable high temperature, high pressure, caustic or acid fluids to be used periodically for cleaning the vessel 180 and the flow passages in the apparatus 190 without damage to the pressure transducers 192 and 120.

Analagously to the Figure 1 embodiment, the level of the liquid in the vessel 180 will be given by:

$$h.P_1 / \left| P_2 - P_1 \right|$$

where     $P_1$ is the pressure sensed by the pressure transducer 192;

$P_2$ is the pressure sensed by the pressure transducer 120; and h is the vertical spacing between the pressure transducers 192 and 120;

as mentioned above, this is independent of the specific gravity of the liquid contents of the vessel 180.

If the liquid in the vessel 180 is subject to a varying gas pressure, the vessel may further be provided, as in the Figure 5 embodiment, with a third pressure transducer 16.3 and associated circuitry 18.3, this being connected to the circuitry 122 via a connection 200. The circuitry 122 will then be programmed to compensate for the varying gas pressures as described above with reference to Figure 5.

CLAIMS:

1.      A method of monitoring the contents of a container vessel (10, 70, 100, 180) which is partly filled with a liquid so that the liquid defines a liquid surface level within the vessel, wherein the pressure ($P_1$) at the bottom of a first column of the liquid is sensed to obtain a first signal corresponding to the pressure at the bottom of the first column, the first column extending from a first predetermined level with respect to the vessel to said liquid surface level; characterised in that the pressure ($P_2$) at the bottom of a second column of the liquid is sensed to obtain a second signal corresponding to the pressure at the bottom of the second column, the height of the second column, or the difference in height between the first and second columns, being a predetermined value; the first and second signals being processed to obtain an output signal as a predetermined function of the first and second signals.

2.      A method according to claim 1, wherein the difference in height between the first and second columns is a predetermined value, the second column extending from a second predetermined level with respect to the vessel to said liquid surface level, characterised in that the pressure at the bottom of the first column is sensed by a first pressure transducer (16.1, 120); and the pressure at the bottom of the second column is sensed by a second pressure transducer (16.2, 192) spaced vertically from the first pressure transducer, the vertical spacing between the first and second pressure transducers determining said predetermined value.

3. A method according to claim 2, characterised in that the first and second transducers (16.1, 16.2) are mounted at different levels on the vessel.

4. A method according to claim 2, characterised in that part of the liquid contents of the vessel is caused to flow into an upright measuring tube (114) leading from the vessel, and wherein the first and second transducers (120, 192) are mounted at different levels on the measuring tube.

5. A method according to claim 4, characterised in that the measuring tube (114) is opened from time to time at its end remote from the vessel (180), to cause displacement of the liquid in the measuring tube by fresh liquid from the vessel.

6. A method according to claim 1, wherein the height of the second column is a predetermined value characterised in that:

part of the liquid contents of the vessel (100) is caused to flow from the vessel into an upright measuring tube (114) leading from the vessel;

the first signal is obtained by sensing the pressure at a low end of the measuring tube while there is flow communication between the interior of the vessel and the measuring tube; and

the second signal is obtained by sensing the pressure at the low end of the tube while flow communication between the interior of the vessel and the measuring tube is blocked off and a high end of the tube is vented, the height of the measuring tube between the low and high ends thereof determining said predetermined value.

7.     A method according to claim 6, characterised in that the high end of the tube (114), when vented, is vented to atmosphere.

8.     A method according to claim 6 or claim 7, characterised in that the first signal is obtained by a pressure transducer (120) mounted at said low end of the measuring tube (114), and wherein the second signal is obtained by the same pressure transducer at a different time.

9.     A method according to any one of the preceding claims, characterised in that said processing includes dividing one of the first and second signals by the difference between the first and second signals.

10.     A method according to any one of the preceding claims, characterised in that the pressure ($P_3$) in the vessel above said liquid surface level is sensed to obtain a third signal corresponding to the pressure in the vessel above the liquid surface level; and wherein said processing includes processing of the third signal to obtain said output signal as a predetermined function of the first, second, and third signals.

11.     An installation which comprises a container vessel (10, 70, 100, 180) for containing a liquid partly filling the vessel so that the liquid defines a liquid surface level within the vessel, and monitoring apparatus (14) for monitoring the contents of the vessel, characterised in that the monitoring apparatus comprises:

sensing means (16.1, 16.2, 120, 192) for sensing two pressures, namely the pressure at the bottom of a first column of the liquid to obtain a first signal corresponding to the pressure at the bottom of the first column, and the pressure at the bottom of a second column of the liquid to obtain a second signal corresponding to the pressure at the bottom of the second column, the arrangement being such that the first column extends from a first predetermined level with respect to the vessel to said liquid surface level, and that the height of the second column, or the difference in height between the first and second columns, is a predetermined value; and

processing means (22, 52, 122) for processing the first and second signals to obtain an output signal as a predetermined function of the first and second signals.

12.    An installation according to claim 11, characterised in that the sensing means comprises a first pressure transducer (16.1, 120) arranged at said first predetermined level with respect to the vessel, and a second pressure transducer (16.2, 192) arranged at a second predetermined level with respect to the vessel.

13.    An installation according to claim 11, characterised in that the monitoring apparatus further comprises:

an upright measuring tube (114) leading from the vessel (100);

a first valve (116) at a high end of the measuring tube, the first valve being arranged, in one condition thereof, to place the interior of the vessel in flow communication with the measuring tube and, in another condition thereof, to block off the interior of the vessel from the measuring tube; and

a second valve (118) at a low end of the measuring tube, the second valve being arranged, in one condition thereof, to close the low end of the tube and, in another condition thereof, to open the low end of the measuring tube;

said sensing means comprising a pressure transducer (120) arranged at the low end of the measuring tube.

14. An installation according to claim 13, characterised in that the first valve (116) is arranged, in said other condition thereof, to vent the upper end of the measuring tube (114) to atmosphere.

15. An installation according to any one of claims 11 to 14, characterised in that it further comprises a third pressure transducer (16.3) for sensing the pressure in the vessel (70, 180) above said liquid surface level to provide a third signal ($P_3$) corresponding to the pressure in the vessel above said liquid surface level, the processing means (22, 122) being arranged to process the first, second, and third signals to obtain said output signal as a predetermined function of the first, second, and third signals.

16. Monitoring apparatus for monitoring the liquid contents of a container vessel (10, 70, 180), the apparatus comprising a first pressure transducer (16.1, 120) operative to provide a first signal corresponding to the pressure at the bottom of a first column of said liquid, characterised in that it further comprises:

a second pressure transducer (16.2, 192) operative to provide a second signal corresponding to the pressure at the bottom of a second column of said liquid; and

processing means (22, 52, 122) operative to divide one of the first and second signals by the difference between the first and second signals.

17. Monitoring apparatus according to claim 16, characterised in that it further comprises a measuring tube (114) for connection in flow communication with the interior of the vessel (180), the first and second pressure transducers (120, 192) being mounted at longitudinally spaced positions on the measuring tube.

18. Monitoring apparatus for monitoring the liquid contents of a container vessel (100), characterised in that it comprises:

a measuring tube (114) having a high end for connection in flow communication with the interior of the vessel, and a low end opposite the high end;

a pressure transducer (120) for sensing the pressure in the tube at the low end thereof;

a first valve (116) at the high end of the tube, the first valve being arranged, in one condition thereof, to place the interior of the vessel in flow communication with the measuring tube and, in another condition thereof, to block off the interior of the vessel from the measuring tube; and

a second valve (118) at the low end of the tube, the second valve being arranged, in one condition thereof, to close the low end of the tube and, in another condition thereof, to open the low end of the measuring tube.

0214801

FIG. I

FIG. 2

FIG. 3

FIG. 4

FIG.9

FIG. 5

FIG. 6

0214801

FIG. 7(a)

FIG. 7(b)

FIG. 7(c)

FIG.8

**European Patent Office**

## EUROPEAN SEARCH REPORT

| DOCUMENTS CONSIDERED TO BE RELEVANT | EP 86306539.7 |
|---|---|

| Category | Citation of document with indication, where appropriate, of relevant passages | Relevant to claim | CLASSIFICATION OF THE APPLICATION (Int. Cl.4) |
|---|---|---|---|
| X | EP - A1 - 0 112 105 (THE BABCOCK & WILCOX COMPANY)<br>* Claim 1; fig. * | 1-3,9, 10,11, 12,15, 16 | G 01 F 23/14 |
| X | EP - A1 - 0 048 589 (FUEL PUMPS LIMITED)<br>* Claims 1,4; fig. 2,4 * | 1-3,9, 10,11, 12,15, 16 | |
| X | GB - A - 1 583 393 (BAILEY MUD MONITORS INC)<br>* Claim 1; fig. 1 * | 1-3,9, 11,12, 16 | |
| A | DE - A1 - 3 039 210 (HOECHST AG)<br>* Claim 1; fig. * | | |
| A | GB - A - 1 429 931 (EAST BRISTOL ENGINEERS LIMITED)<br>* Claim 1; fig. 3 * | | TECHNICAL FIELDS SEARCHED (Int. Cl.4)<br><br>G 01 F 23/00 |
| A | GB - A - 1 379 554 (EAST BRISTOL ENGINEERS LIMITED)<br>* Claim 1; fig. 3 * | | |

The present search report has been drawn up for all claims

| Place of search | Date of completion of the search | Examiner |
|---|---|---|
| VIENNA | 28-11-1986 | STÖGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82